# Europäisches Patentamt
# European Patent Office
# Office européen des brevets

(11) Numéro de publication: **0 053 062**
**B1**

(12) **FASCICULE DE BREVET EUROPEEN**

(45) Date de publication du fascicule du brevet:
**10.04.85**

(51) Int. Cl.⁴: **B 23 Q 11/00**

(21) Numéro de dépôt: **81401795.0**

(22) Date de dépôt: **13.11.81**

(54) **Dispositif d'équilibrage d'une tête d'usinage se déplaçant sur une traverse de fraiseuse à un seul montant.**

(30) Priorité: **24.11.80 FR 8024887**

(43) Date de publication de la demande:
**02.06.82 Bulletin 82/22**

(45) Mention de la délivrance du brevet:
**10.04.85 Bulletin 85/15**

(84) Etats contractants désignés:
**DE GB IT**

(56) Documents cités:
**DE - C - 262 311**
**DE - C - 262 996**
**FR - A - 823 896**
**FR - A - 984 957**
**FR - A - 1 406 665**
**FR - A - 1 537 974**
**FR - A - 2 087 241**
**FR - A - 2 259 664**
**FR - A - 2 417 367**
**GB - A - 164 154**
**GB - A - 292 227**
**GB - A - 632 903**
**US - A - 1 329 726**
**US - A - 1 473 582**
**US - A - 3 131 584**
**US - A - 3 584 868**

(73) Titulaire: **FOREST LINE, 124, Bd Haussmann,
F-75008 Paris (FR)**

(72) Inventeur: **Line, Henri B., Chemin de Rumigny
Saint-Fuscien, F-80680 Sains-en-Amienois (FR)**

(74) Mandataire: **Moulines, Pierre et al, Cabinet BEAU de
LOMENIE 55, rue d'Amsterdam, F-75008 Paris (FR)**

ACTORUM AG

## Description

La présente invention a pour objet un dispositif d'équilibrage d'une tête d'usinage se deplaçant sur une traverse de machine à un seul montant.

On connaît des fraiseuses dont la tête d'usinage à axe vertical coulisse horizontalement sur une traverse horizontale fixée sur un montant vertical ou montée coulissante verticalement sur des glissières portées par ce montant. Ce montant vertical est soit fixe, soit mobile sur des glissières parallèles ou perpendiculaires à l'axe principal de la table sur laquelle sont fixées les pièces à usiner.

Il est connu par le document FR-A 984 957 de réaliser un dispositif d'équilibrage d'une tête d'usinage se déplaçant horizontalement sur toute la longueur d'une traverse fixe solidaire d'un montant vertical mobile et comprenant un moyen de support sur lequel se déplace une masse mobile d'équilibrage.

Au-dessus de la traverse est montée une poutre horizontale articulée autour d'un axe sur le bâti, ladite poutre étant équilibrée par un poids disposé à son extrémité opposée à la position du porte-outil. Sur la barre est monté coulissant horizontalement un chariot protant des galets sur lesquels est disposé un câble reliant le port-outil a un poids suspendu à l'une des extrémités du câble.

Toutefois lors du déplacement de la tête d'usinage on peut constater que le changement de position de la projection horizontale de son centre de gravité provoque des modifications importantes des efforts supportés par la traverse, le montant et leurs éléments de fixation, ce qui entraîne des déformations nuisibles pour la géométrie de la fraiseuse.

De plus ce dispositif ne permet qu'un déplacement limité de la tête d'usinage et du contrepoids situés de part et d'autre d'une paroi du montant.

La présente invention a pour objet de remédier à ces inconvénients.

Conformément à la présente invention, la traverse et le moyen de support sont fixés d'un même côté du montant vertical, ledit moyen de support fixé sur le montant vertical, s'étendant au-dessus et parallèlement à la traverse, ladite masse et la tête d'usinage étant reliés à un moyen d'entraînement assurant la synchronisation des mouvements de la masse et de la tête d'usinage sur toute la longueur de la traverse.

Cette disposition permet de maîtriser les variations du centre de gravité de l'ensemble constitué par la tête d'usinage et la masse mobile, de telle sorte que sa projection verticale reste fixe ou se déplace dans des limites compatibles avec la rigidité de l'ensemble constitué par la traverse et le montant.

Il en résulte que les déformations géométriques de la fraiseuse liées au déplacement de la tête d'usinage sont soit annulées, soit corrigées à volonté.

Il est possible de choisir une masse mobile d'un poids tel ou dont le mouvement soit synchronisé avec celui de la tête d'usinage de manière telle que le centre de gravité de l'ensemble se rapproche du montant vertical lorsque la tête d'usinage s'en éloigne, ce qui produit une flexion du montant et un basculement consécutif de la traverse dans son plan vertical qui compense ou annule les effets de la flexion de la traverse sous l'effet du poids de la tête.

Il est possible également, si la masse mobile est supportée par une traverse auxiliaire, d'utiliser un moyen de suspension mobile de la tête d'usinage sur cette traverse auxiliaire pour porter tout ou partie du poids de la tête d'usinage et soulager d'autant la traverse principale; toutefois, cette disposition n'est pas indispensable pour atteindre les buts visés par la présente invention.

D'autres caractéristiques et avantages de l'invention seront mieux compris à la lecture de la description qui va suivre de plusieurs exemples de réalisation présentés à titre non limitatif et en se référant aux dessins annexés, sur lesquels:

la figure 1 est une vue en élévation de face d'une fraiseuse à montant mobile et traverse fixe équipée du dispositif d'équilibrage suivant l'invention;

la figure 2 est une vue en élévation latérale de la même fraiseuse et du dispositif d'équilibrage;

la figure 3 est une vue en élévation de face d'un autre mode de réalisation avec une fraiseuse à montant fixe et traverse fixe équipée du dispositif d'équilibrage suivant l'invention supporté par une traverse auxiliaire;

la figure 4 est une vue partielle en élévation latérale de la fraiseuse représentée à la figure 3 et du dispositif d'équilibrage;

la figure 5 est une vue schématique d'une fraiseuse suivant la figure 1 sur laquelle sont représentés les poids et les reactions d'appui mises en oeuvre.

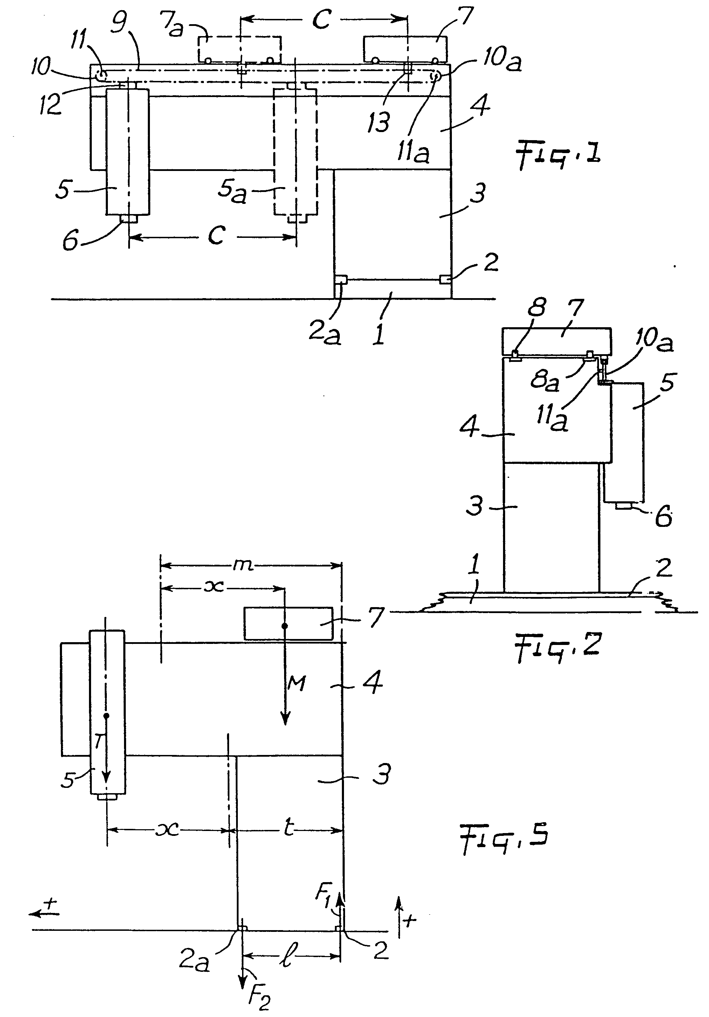

Aux figures 1 et 2, on a représenté une fraiseuse à montant mobile et traverse fixe qui comprend un bâti longitudinal 1 sur lequel est monté coulissant horizontalement, par l'intermédiaire de glissières et patins 2, 2a, un montant vertical 3 supportant une traverse fixe 4 s'étendant horizontalement en porte à faux d'un côté du montant. Sur la traverse 4, est montée coulissante horizontalement une tête de fraisage 5 qui comporte à sa partie inférieure une broche porte-outil 6.

Conformément à l'invention, une masse d'équilibrage 7 est montée coulissante horizontalement au moyen de glissières 8, 8a sur la face supérieure de la traverse 4.

Sur la face avant de la traverse 4 au-dessous de la masse d'équilibrage 7, est disposé une chaîne ou câble sans fin 9 qui est supporté par deux pignons dentés ou poulies 10, 10a entre lesquels ladite chaîne ou ledit câble est tendu.

Les pignons ou poulies 10, 10a sont montés en rotation libre sur des axes horizontaux 11, 11a espacés l'un de l'autre et fixés sur la traverse 4.

La partie supérieure de la tête de fraisage 5 est rendue solidaire par un organe de fixation 12 du brin inférieur de la chaîne sans fin 9, alors que la masse 7 est rendue solidaire du brin supérieur par un organe de fixation 13.

Ainsi, lorsque la tête de fraisage 5 se déplace d'une distance C pour passer de la position 5 représentée en trait plein à la position 5a représentée en trait interrompu, la masse mobile 7 qui se trouve à la position représentée en trait plein se déplace en sens contraire d'une même distance C pour passer à la position 7a représentée en trait interrompu.

Sur l'ensemble de la fraiseuse schématisé à la figure 5, le montant 3 et la traverse 4 exercent par eux-même des forces constantes sur leurs appuis 2 et 2a sur le bâti 1. Les éléments mobiles par rapport au corps de la fraiseuse, c'est-à-dire la tête de fraisage 5 et la masse d'équilibrage 7, appliquent par contre des forces variables F1 et F2 sur les appuis 2 et 2a. Le déplacement x de la masse d'équilibrage 7 de poids M est égal et de sens contraire au déplacement, mentionné également par la référence x, de la tête de fraisage 5 de poids T.

On peut en déduire:

$$F1 = \frac{T - M}{1} x + \frac{Mm + Tt}{1} - (M + T)$$

$$F2 = \frac{M - T}{1} x - \frac{Mm + Tt}{1}$$

Il en résulte que si M = T, c'est-à-dire si le poids de la masse 7 est égal au poids de la tête de fraisage 5, les forces F1 et F2 ne dépendent pas de x et demeurent donc constantes, quelle que soit la position déterminée par x, de la tête de fraisage. Les forces s'exerçant dans le sens vertical sur le montant vertical de la fraiseuse et sur ses appuis étant constantes, sa position dans le plan vertical est indépendante de la position de la tête atteignant ainsi le but visé.

Si le poids M de la masse 7 est supérieur à celui T de la tête de fraisage 5, la force d'appui F1 s'accroît de la valeur négative $\frac{T - M}{1} \Delta x$ lorsque x augmente de $\Delta x$, c'est-à-dire lorsque la tête de fraisage 5 s'éloigne du montant 3, et la force d'appui F2 s'accroît de la valeur positive $\frac{M - T}{1} \Delta x$ dans le même temps. L'appui 2 est donc surchargé et s'affaisse, alors que l'appui 2a est déchargé et se relève. Il en résulte un basculement du montant 3 et de la traverse 4 qui assure le relèvement de l'extrémité libre de la traverse 4, compensant ainsi l'affaissement entraîné par sa flexion accrue lorsque la tête de fraisage se rapproche de cette extrémité libre.

Ce phénomène peut être utilisé par un choix judicieux du poids M de la masse 7 et de la distance m pour parfaire la correction des déformations de la fraiseuse.

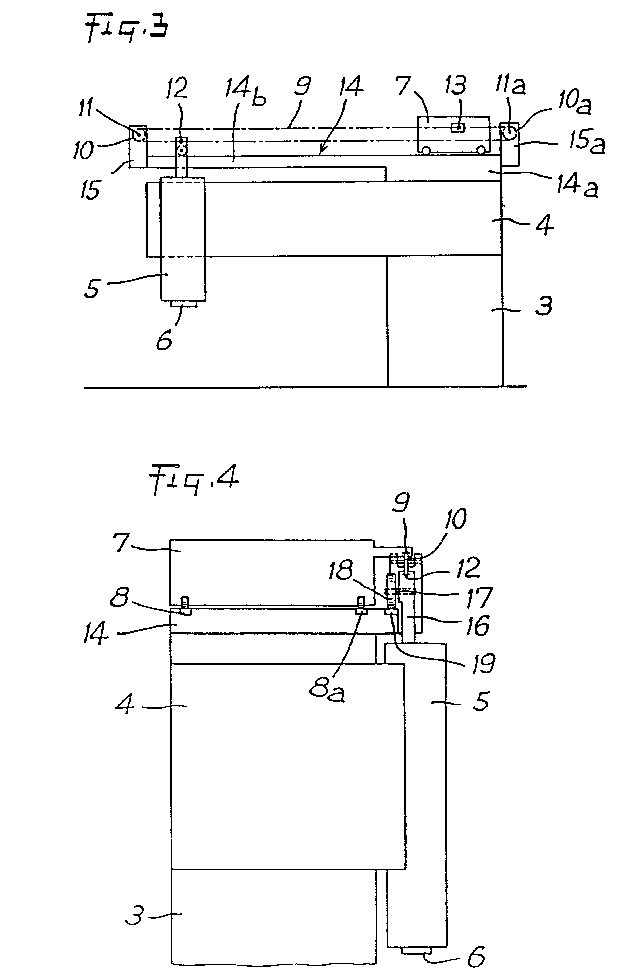

Aux figures 3 et 4, on a représenté un autre mode de réalisation de la fraiseuse qui comporte un montant fixe 3 sur lequel est montée une traverse fixe 4 qui comprend les même éléments principaux que ceux mentionnés ci-dessus et représentés aux figures 1 et 2. Toutefois, dans ce mode de réalisation de la fraiseuse, la masse d'équilibrage 7 se déplace sur des glissières 8, 8a qui sont prévues sur une traverse auxiliaire 14 dont la partie 14a est en appui et solidaire du montant 3 par l'intermédiaire de la traverse 4.

La partie 14b de la traverse auxiliaire 14 est indépendante en flexion de la traverse principale 4. Aux deux extrémités de la traverse auxiliaire 14, sont fixés deux bras 15, 15a sur lesquels sont fixés respectivement deux axes 11, 11a portant des pignons dentés 10, 10a sur lesquels est montée la chaîne sans fin 9 qui est reliée par des organes de fixation 12 et 13 à la tête de fraisage 5 et à la masse 7.

Par ailleurs, la tête de fraisage 5 est munie à sa partie supérieure d'un bras 16 s'étendant verticalement et portant un axe 17 sur lequel est monté en rotation libre un galet 18 se déplaçant sur un chemin de roulement 19 prévu sur l'un des bords de la traverse auxiliaire 14.

De ce fait, la traverse auxiliaire 14 supporte à la fois le poids de la masse d'équilibrage 7 qui se déplace sur sa face supérieure et tout ou partie du poids de la tête de fraisage 5 par le bras 16 et le galet 18. La traverse principale 4 ne supporte plus que la partie résiduelle du poids de la tête 5 et sa déformation par flexion dans le plan vertical due au mouvement horizontal de la tête 5 est réduite d'autant, la précision d'usinage de la fraiseuse s'en trouvant ainsi améliorée.

Le bras de suspension 16 est conçu de façon à exercer une force constante ou variable de sustentation de la tête de fraisage 5, par exemple à l'aide d'un vérin hydraulique ou d'un ressort non représenté au dessin.

**Revendications**

1. Dispositif d'équilibrage d'une tête d'usinage se déplaçant horizontalement sur toute la longueur d'une traverse fixe solidaire d'un montant vertical mobile d'une machine-outil et comprenant un moyen de support sur lequel se déplace une masse mobile d'équilibrage, caractérisé en ce que la traverse (4) et le moyen de support (4, 14) sont fixés d'un même côté du montant vertical (3), ledit moyen de support (4, 14) fixé sur le montant vertical (3), s'étendant au-dessus et parallèlement à la traverse, ladite masse (7) et la tête d'usinage (5) étant reliés à un moyen d'entraînement (9) assurant la synchronisation des mouvements de la masse (7) et de la tête d'usinage (5) sur toute la longueur de la traverse.

2. Dispositif suivant la revendication 1, caractérisé en ce que le moyen de support de la masse d'équilibrage (7) est constitué par la traverse (4) solidaire du montant (3) et sur laquelle coulisse la tête d'usinage (5).

3. Dispositif suivant la revendication 1, caractérisé en ce que le moyen de support de la masse d'équilibrage (7) est constitué par une traverse auxiliaire (14) disposée au-dessus de la traverse principale (4) sur laquelle coulisse la tête d'usinage (5), ladite traverse auxiliaire (14) étant solidaire du montant (3) ou montée coulissante sur celui-ci à l'une de ses extrémités et indépendante de la traverse principale (4) dans sa partie en porte à faux.

4. Dispositif suivant la revendication 1, caractérisé en ce que le moyen d'entraînement en synchronisation de la masse d'équilibrage est constitué d'un câble ou d'une chaîne sans fin (9) supporté par deux pignons (10, 10a) montés en rotation libre sur des axes espacés l'un de l'autre fixés sur le moyen de support (4, 14) ladite masse (7) étant solidaire de l'un des brins du câble ou de la chaîne sans fin (9) et la tête d'usinage (5) de l'autre brin.

5. Dispositif suivant la revendication 3, caractérisé en ce que la tête d'usinage (5) est supportée en tout ou partie par un moyen de suspension (16, 18) en appui sur la traverse auxiliaire (14) et susceptible de se déplacer par rapport à cette dernière.

6. Dispositif suivant la revendication 5, caractérisé en ce que le moyen de suspension est constitué d'un bras (16) s'étendant verticalement qui est solidaire de la partie supérieure de la tête d'usinage (5) et qui est muni à son extrémité libre d'un axe (17) sur lequel est monté en rotation libre un galet (18) se déplaçant sur un chemin de roulement (19) prévu sur la face supérieure de la traverse auxiliaire (14).

7. Dispositif suivant la revendication 5, caractérisé en ce que le moyen de suspension (16, 18) comporte un organe élastique équilibrant tout ou partie du poids de la tête d'usinage (5).

8. Dispositif suivant la revendication 5, caractérisé en ce que le moyen de suspension (16, 18) comporte un vérin hydraulique alimenté en fluide sous une pression constante et exerçant une force d'équilibrage constante sur la tête d'usinage (5).

9. Dispositif suivant la revendication 1, caractérisé en ce que la masse d'équilibrage (7) a un poids égal à clui de la tête d'usinage (5).

10. Dispositif suivant la revendication 1, caractérisé en ce que la masse d'équilibrage (7) a un poids supérieur à celui de la tête d'usinage (5) déterminé de telle sorte que le basculement du montant (3) fixe ou mobile lors des déplacements de la tête d'usinage (5) entraîne un mouvement de la partie libre de la traverse (4) qui compense en tout ou partie la flexion de celle-ci sous l'effet du poids de la tête d'usinage (5).

**Patentansprüche**

1. Gleichgewichtsvorrichtung für einen Bearbeitungskopf, der sich waagerecht auf der gesamten Länge eines feststehenden Querträgers erstreckt, der mit einem senkrechten beweglichen Ständer einer Werkzeugmaschine fest verbunden ist und eine Trageinrichtung aufweist, auf der sich eine bewegliche Gleichgewichtsmasse verschiebt, dadurch gekennzeichnet, dass der Querträger (4) und die Trageinrichtung (4, 14) auf derselben Seite des senkrechten Ständers (3) befestigt sind, wobei die am senkrechten Ständer (3) befestigte Trageinrichtung (4, 14) sich über dem und parallel zum Querträger erstreckt, wobei die Masse (7) und der Bearbeitungskopf (5) durch eine Antriebseinrichtung (9) verbunden sind, die die Synchronisierung der Bewegungen der Masse (7) und des Bearbeitungskopfs (5) auf der gesamten Länge des Querträgers gewährleistet.

2. Vorrichtung nach Anspruch 1, dadurch gekennzeichnet, dass die Trageinrichtung der Gleichgewichtsmasse (7) durch den Querträger (4) gebildet ist, der mit dem Ständer (3) fest verbunden ist und auf dem sich der Bearbeitungskopf (5) verschiebt.

3. Vorrichtung nach Anspruch 1, dadurch gekennzeichnet, dass die Trageinrichtung der Gleichgewichtsmasse (7) durch einen über dem Hauptquerträger (4) angeordneten Hilfsquerträger (14) gebildet ist, auf dem sich der Bearbeitungkopf (5) verschiebt, wobei der Hilfsquerträger (14) mit dem Ständer (3) fest verbunden ist oder auf diesem an einem seiner Enden verschiebbar und in seinem frei überstehenden Teil unabhängig vom Hauptquerträger (4) befestigt ist.

4. Vorrichtung nach Anspruch 1, dadurch gekennzeichnet, dass die Einrichtung für den synchronen Antrieb der Gleichgewichtsmasse durch ein endloses Seil oder eine endlose Kette (9) gebildet ist, die von zwei Rädern (10, 10a) getragen wird, die auf voneinander im Abstand angeordneten und auf der Trageinrichtung (4, 14) befestigten Achsen frei drehbar gelagert sind, wobei die Masse (7) mit einem der Stränge des endlosen Seils oder der endlosen Kette (9) und der Bearbeitungskopf (5) mit dem anderen Strang fest verbunden sind.

5. Vorrichtung nach Anspruch 3, dadurch gekennzeichnet, dass der Bearbeitungskopf (5) ganz oder teilweise von einer Aufhängeeinrichtung (16, 18) getragen wird, die auf dem Hilfsquerträger (14) aufliegt und sich gegenüber letzterem verschieben kann.

6. Vorrichtung nach Anspruch 5, dadurch gekennzeichnet, dass die Aufhängeeinrichtung durch einen sich senkrecht erstreckenden Arm (16) gebildet ist, der mit dem Oberteil des Bearbeitungskopfs (5) fest verbunden ist und der an seinem freien Ende mit einer Achse (17) versehen ist, an der eine Rolle (18) frei gelagert ist, die sich auf einer auf der Oberseite des Hilfsquerträgers (14) vorgesehenen Rollbahn (19) verschiebt.

7. Vorrichtung nach Anspruch 5, dadurch gekennzeichnet, dass die Aufhängeeinrichtung (16, 18) ein elastisches Organ aufweist, welches das Gewicht des Bearbeitungskopfs (5) ganz oder teilweise ausgleicht.

8. Vorrichtung nach Anspruch 5, dadurch gekennzeichnet, dass die Aufhängeeinrichtung (16, 18) einen hydraulischen Stellzylinder aufweist, der mit einem unter konstantem Druck stehenden Druckmittel gespeist wird und auf den Bearbeitungskopf (5) eine konstante Gleichgewichtskraft ausübt.

9. Vorrichtung nach Anspruch 1, dadurch gekennzeichnet, dass die Gleichgewichtsmasse (7) ein Gewicht hat, das demjenigen des Bearbeitungskopfs (5) gleich ist.

10. Vorrichtung nach Anspruch 1, dadurch gekennzeichnet, dass die Gleichgewichtsmasse (7) ein Gewicht hat, das grösser als dasjenige des Bearbeitungskopfs (5) ist und derart festgelegt ist, dass das Kippen des feststehenden oder beweglichen Ständers (3) während der Verschiebungen des Bearbeitungskopfs (5) eine Bewegung des freien Teils des Querträgers (4) bedingt, die dessen Durchbiegung unter der Wirkung des Gewichts des Bearbeitungskopfs (5) ganz oder teilweise kompensiert.

**Claims**

1. Balancing device for a machining head moving horizontally along the whole length of a fixed cross-piece integral with a movable vertical pole of a machine tool and comprising a supporting means on which a movable counterpoise moves, characterized in that the cross-piece (4) and the supporting means (4, 14) are fixed on the same side of a vertical pole (3) said supporting means (4, 14) being fixed on the vertical pole (3) extending above and in parallel direction with the cross-piece, said counterpoise (7) and the machining head (5) being connected to drive means (9) synchronizing the movements of the counterpoise (7) and with those of the machining head (5) throughout length of the cross-piece.

2. Device according to claim 1, characterized in that the supporting means of the counterpoise (7) is constituted by the cross-piece (4) integral with the pole (3) and on which the machining head (5) slides.

3. Device according to claim 1, characterized in that the supporting means of the counterpoise (7) is constituted by an auxiliary cross-piece (14) placed above the main cross-piece (4) on which the machining head (5) slides, said auxiliary cross-piece (14) being integral with the pole (3) or is slidably mounted for sliding thereon at one of its ends and being independent of the main cross-piece (4) in its hanging-out part.

4. Device according to claim 1, characterized in that the means for synchronously driving the counterpoise is constituted by a cable or an endless chain (9) supported by two pinions (10, 10a) mounted for free rotation on spaced-apart spindles fixed on the supporting means (4, 14), said counterpoise being integral with one of the cable strand or of the endless chain (9) and the machining head (5) of the other strand.

5. Device according to claim 3, characterized in that the machining head (5) is fully or partly supported by suspension means (16, 18) resting on the auxiliary cross-piece (14) and able to move with respect to the latter.

6. Device according to claim 5, characterized in that the suspension means is constituted by a vertically extending arm (16) which is integral with the upper part of the machining head (5) and which is provided at its free end with a spindle (17) on which a roller (18) is mounted for free rotation, said roller moving along a roller track (19) provided on the upper face of the auxiliary cross-piece (14).

7. Device according to claim 5, characterized in that the suspension means (16, 18) comprises an elastic member balancing whole or part of the machining head (5) weight.

8. Device according to claim 5, characterized in that the suspension means (16, 18) comprises a hydraulic jack supplied with fluid under constant pressure and exerting a constant balancing force on the machining head (5).

9. Device according to claim 1, characterized in that the counterpoise (7) has a weight equal to that of the machining head (5).

10. Device according to claim 1, characterized in that the counterpoise (7) has a weight greater than that of the machining head (5), determined in such a way that the rocking of the fixed or movable pole (3) during displacements of the machining head (5) causes a movement of the free end of the cross-piece (4) which fully or partly counterbalances the bending of the latter under the effect of the weight of the machining head (5).

0 053 062

Fig.1

Fig.2

Fig.5

7

Fig.3

Fig.4